# EUROPÄISCHE PATENTSCHRIFT

(11) **EP 2 348 595 B1**
(45) Veröffentlichungstag und Bekanntmachung des Hinweises auf die Patenterteilung: **03.04.2019**
(21) Anmeldenummer: 10196399.9
(22) Anmeldetag: 22.12.2010
(51) Int. Cl.: H02J 3/18, H02J 3/46

(54) **VERFAHREN UND VORRICHTUNG ZUM BETREIBEN EINES UMRICHTERWERKS EINES ELEKTRISCHEN BAHN-NETZES**
Method and device for operating a converter station of an electrical rail network
Procédé et dispositif de fonctionnement d'une station de convertisseur d'un réseau ferroviaire

(30) Priorität: 19.01.2010 DE 102010005656
(43) Veröffentlichungstag der Anmeldung: 27.07.2011
(73) Patentinhaber: GE Energy Power Conversion GmbH, 12277 Berlin (DE)
(72) Erfinder: Janning, Jörg, 12559 Berlin (DE)
(74) Vertreter: Serjeants LLP

(56) Entgegenhaltungen:
- AT-B- 208 962
- DE-A1- 3 236 071
- DE-A1-102006 023 252
- DE-B3- 10 006 844
- DE-C- 975 999
- XIE J ET AL: "REGELUNGSKONZEPTE FUER DAS UMRICHTERWERK JUEBEK", ELEKTRISCHE BAHNEN, OLDENBOURG INDUSTRIEVERLAG, MUNCHEN, DE, Bd. 96, Nr. 8, 1. August 1998 (1998-08-01) , Seiten 249-256, XP000777444, ISSN: 0013-5437

## Beschreibung

Die Erfindung betrifft ein Verfahren nach dem Oberbegriff des Anspruchs 1 sowie eine Vorrichtung nach dem Anspruch 10.

Ein derartiges Verfahren sowie eine derartige Vorrichtung sind beispielsweise aus der DE 10 2006 023 252 A1, aus der DE 100 06 844 B3 und aus der DE 32 36 071 A1 bekannt.

Dort ist beispielhaft ein Umrichterwerk zwischen zwei Unterwerken eines elektrischen Bahn-Netzes angeordnet. Zur Vermeidung von ungewollten und verlustbehafteten Energieübertragungen zwischen dem Umrichterwerk und den Unterwerken über die Fahrleitungen des Bahn-Netzes muss eine Synchronisierung der von dem Umrichterwerk gelieferten Spannung vorgenommen werden. Hierzu werden die Ausgangsspannungen der beiden Unterwerke gemessen und an das Umrichterwerk übertragen. In dem Umrichterwerk wird daraus eine optimierte Spannung ermittelt, auf die die Ausgangsspannung des Umrichterwerks dann mit Hilfe eines Umrichters eingestellt wird. Dabei ist es erforderlich, dass die Übertragung der gemessenen Ausgangsspannungen mit einer hohen Taktrate erfolgt und die erforderliche Übertragungsdauer muss ebenfalls berücksichtigt werden. Bei einem Ausfall der erläuterten Übertragung der gemessenen Ausgangsspannungen der beiden Unterwerke an das Umrichterwerk ist die vorstehend erläuterte Einstellung der Ausgangsspannung des Umrichterwerks nicht mehr möglich. Damit ist auch eine Minimierung der Übertragungsverluste über die Fahrleitungen nicht mehr möglich.

Aufgabe der Erfindung ist es, ein Verfahren zu schaffen, das auch bei einem Ausfall der erläuterten Übertragung der gemessenen Ausgangsspannungen der beiden Unterwerke an das Umrichterwerk noch eine Minimierung der Übertragungsverluste über die Fahrleitungen herbeiführen kann.

Die Erfindung löst diese Aufgabe durch ein Verfahren nach dem Anspruch 1 sowie durch eine Vorrichtung nach dem Anspruch 10.

Erfindungsgemäß wird aus einer gemessenen Spannung deren Grundschwingungsamplitude ermittelt, weiterhin wird eine Soll-Grundschwingungsamplitude und ein Soll-Leistungsfaktor vorgegeben, um dann aus der Grundschwingungsamplitude, der Soll-Grundschwingungsamplitude und dem Soll-Leistungsfaktor einen Wirkleistungssollwert und einen Blindleistungssollwert zu ermitteln.

Mit Hilfe des Wirkleistungssollwerts und des Blindleistungssollwerts kann eine Sollspannung für das Umrichterwerk ermittelt werden. Mit dieser Sollspannung kann die Ausgangsspannung des Umrichterwerks auch bei einem Ausfall der Übertragung der gemessenen Ausgangsspannungen der beiden Unterwerke an das Umrichterwerk eingestellt werden. Damit wird auch bei dem genannten Ausfall eine Minimierung der Übertragungsverluste über die Fahrleitungen erreicht.

Das erfindungsgemäße Verfahren kann bei beliebigen Topologien des Bahn-Netzes eingesetzt werden. Es müssen dabei nicht zwei benachbarte Unterwerke vorhanden sein, sondern das Verfahren kann bereits mit einem einzelnen Unterwerk zum Einsatz kommen. Dabei ist es nicht erforderlich, dass das Unterwerk unmittelbar mit dem Umrichterwerk gekoppelt ist, sondern es genügt deren mittelbare Nachbarschaft.

Bei der Soll-Grundschwingungsamplitude handelt es sich vorzugsweise im wesentlichen um diejenige Spannungsamplitude, die in den beiden Unterwerken vorhanden ist. Und bei dem Soll-Leistungsfaktor handelt es sich vorzugsweise um einen mittleren Leistungsfaktor, der die durch den Bahnbetrieb entstehenden Lasten repräsentiert. Der Leistungsfaktor wird dabei insbesondere von der Impedanz der Fahrleitungen und/oder von den Leistungsfaktoren der betriebenen Züge bestimmt.

Bei einer vorteilhaften Weiterbildung der Erfindung werden eine Ersatz-Soll-Grundschwingungsamplitude und ein Ersatz-Soll-Leistungsfaktor ermittelt, die anstelle der Soll-Grundschwingungsamplitude und des Soll-Leistungsfaktors verwendet werden. Vorzugsweise wird dabei aus der gemessenen Spannung deren Grundschwingungsamplitude ermittelt, und es wird ein Wirkleistungsistwert und ein Blindleistungsistwert ermittelt, um dann die Ersatz-Soll-Grundschwingungsamplitude und den Ersatz-Soll-Leistungsfaktor aus diesen Größen zu ermitteln.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

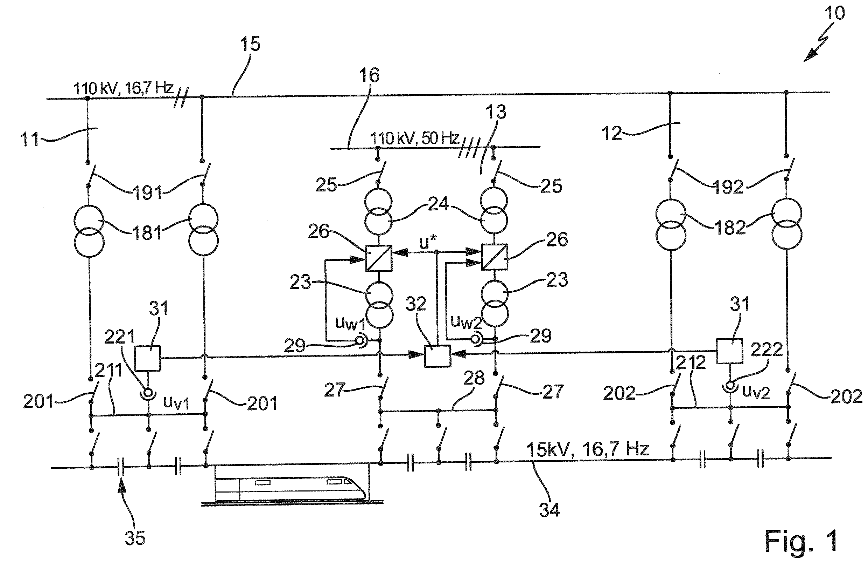

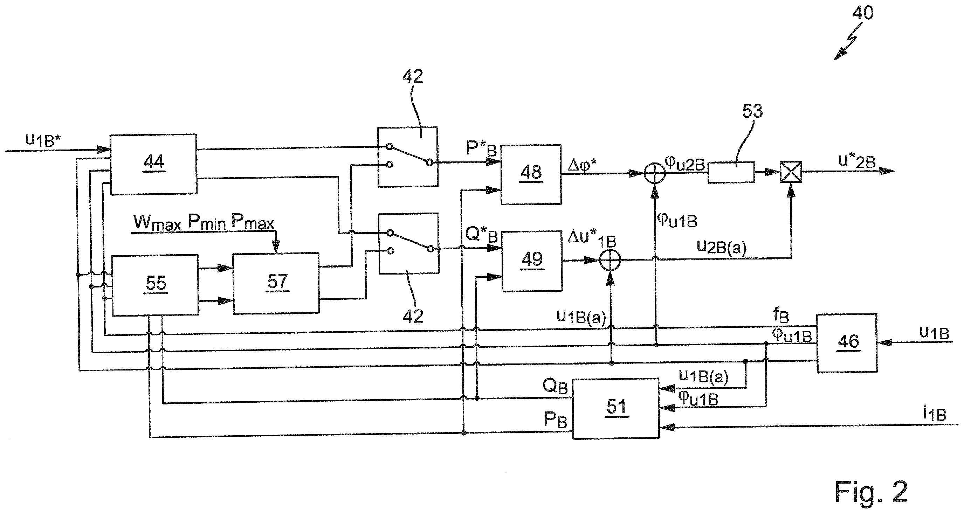

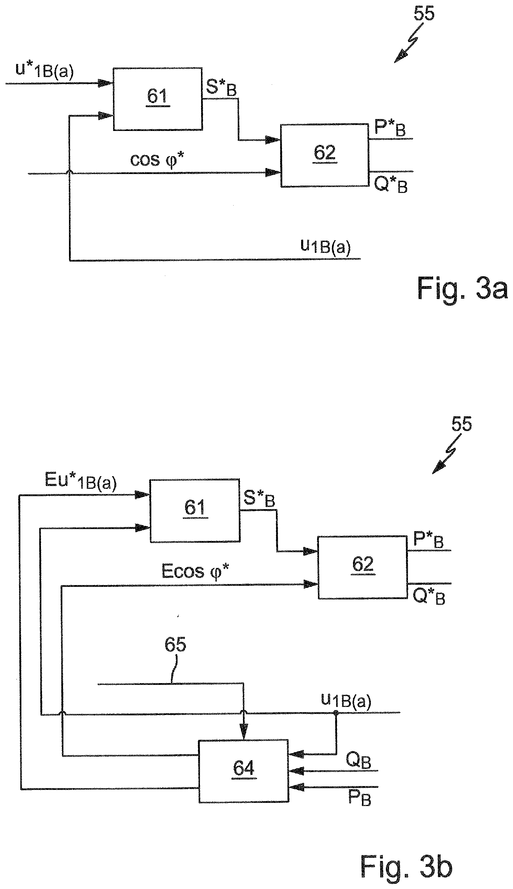

Figur 1 zeigt einen schematischen Schaltplan eines Ausführungsbeispiels eines elektrischen Bahn-Netzes mit einem Umrichterwerk, Figur 2 zeigt ein schematisches Blockschaltbild eines Ausführungsbeispiels eines erfindungsgemäßen Verfahrens zum Betreiben des Umrichterwerks der Figur 1 mit einem Netzregler, und Figuren 3a, 3b zeigen schematische Blockschaltbilder zweier Ausführungsbeispiele des Netzreglers der Figur 2.

In der Figur 1 ist ein Bahn-Netz 10 mit zwei Unterwerken 11, 12 und einem dazwischen angeordneten Umrichterwerk 13 dargestellt. Der örtliche Abstand des Umrichterwerks 13 von jedem der beiden Unterwerke 11, 12 beträgt etwa 50 km bis etwa 60 km.

Die beiden Unterwerke 11, 12 werden aus einem gemeinsamen zweiphasigen elektrischen Netz 15 mit einer Nenn-Spannung von 110 kV und einer Nenn-Frequenz von 16,7 Hz gespeist, bei dem es sich insbesondere um das Verbundnetz der Bahn handeln kann. Das Umrichterwerk 13 wird aus einem dreiphasigen elektrischen Netz 16 mit einer Nenn-Spannung von 110 kV und einer Nenn-Frequenz von 50 Hz gespeist, bei dem es sich insbesondere um das allgemeine Landes- bzw. Verbrauchernetz handeln kann.

Jedes der beiden Unterwerke 11, 12 weist zwei Transformatoren 181, 182 auf, die einerseits über Schalter 191, 192 mit dem Netz 15 verbunden sind, und die andererseits über Schalter 201, 202 jeweils eine gemeinsame Sammelschiene 211, 212 speisen, die eine Spannung uᵥ₁, uᵥ₂ von etwa 15 kV und eine Frequenz von 16,7 Hz aufweist. Die Spannungen uᵥ₁, uᵥ₂ werden mit Hilfe von jeweils einem Sensor 221, 222 gemessen. Aufgrund der Speisung aus dem gemeinsamen Netz 15 sind die beiden Spannungen uᵥ₁, uᵥ₂ zueinander synchronisiert, wobei die Spannungen uᵥ₁, uᵥ₂ hinsichtlich ihrer Phasenlage in Abhängigkeit vom Lastzustand des Netzes 15 auch geringfügig voneinander abweichen können.

Das Umrichterwerk 13 weist zwei Transformatoren 24 auf, die einerseits über Schalter 25 mit dem Netz 16 verbunden sind, und die andererseits mit jeweils einem Umrichter 26 verbunden sind. Jeder der Umrichter 26 speist über einen weiteren Transformator 23 und einen Schalter 27 eine gemeinsame Sammelschiene 28. Anstelle des Transformators 23 kann auch eine Längsdrossel zum Einsatz kommen, sofern die Umrichter 26 über eine entsprechende Ausgangsspannung verfügt.

Die ausgangsseitigen Spannungen u_{w1}, u_{w2} von jedem der beiden Umrichter 26 zwischen dem weiteren Transformator 23 und dem Schalter 27 werden mit Hilfe von Sensoren 29 gemessen und an den zugehörigen Umrichter 26 rückgekoppelt. Wie noch erläutert werden wird, können weitere Sensoren zur Messung beispielsweise des ausgangsseitigen Stroms der beiden Umrichter 26 vorhanden sein.

Die Spannungen uᵥ₁, uᵥ₂ werden von jedem der beiden Unterwerke 11, 12 mit Hilfe eines Senders 31 an eine dem Umrichterwerk 13 zugeordnete Empfangs- und Auswerteeinrichtung 32 übertragen. Dabei kann es sich um eine drahtgebundene oder eine drahtlose Übertragung handeln, insbesondere um eine Übertragung per Telefon bzw. Modem. Die Empfangs- und Auswerteeinrichtung 32 erzeugt aus den beiden empfangenen Spannungen uᵥ₁, uᵥ₂ und gegebenenfalls unter zusätzlicher Berücksichtigung der Impedanzen der Fahrleitungen 34 einen Spannungssollwert u* für das Umrichterwerk 13. Dieser Spannungssollwert u* wird an jeden der beiden Umrichter 26 weitergegeben.

In Abhängigkeit von dem Spannungssollwert u* stellen die beiden Umrichter 26 die Spannung auf der Sammelschiene 28 derart ein, dass dort hinsichtlich Amplitude, Frequenz und Phasenlage eine ähnliche Spannung vorliegt wie auf den beiden Sammelschienen 211, 212. Das Umrichterwerk 13 hat somit die Eigenschaft, dass die Spannung auf der Sammelschiene 28 in ihrer Amplitude, Frequenz und Phasenlage eingestellt werden kann.

Die beiden Sammelschienen 211, 212 der Unterwerke 11, 12 sowie die Sammelschiene 28 des Umrichterwerks 13 können über eine Mehrzahl nicht näher gekennzeichneter Schalter auf die Fahrleitungen 34 für den elektrischen Bahnbetrieb weitergeschaltet werden. Die Fahrleitungen 34 können dabei zwischen den vorgenannten Schaltern galvanisch voneinander getrennt sein, was in der Figur 1 mit Hilfe des Bezugszeichens 35 gekennzeichnet ist. Über die Fahrleitungen 34 können dann insbesondere Züge angetrieben und damit fortbewegt werden.

In der Figur 2 ist ein Verfahren 40 dargestellt, das in jedem der beiden Umrichter 26 des Umrichterwerks 13 der Figur 1 zur Anwendung kommen kann. Das Verfahren 40 bezieht sich also auf einen einzelnen Umrichter 26 oder auf beide Umrichter 26 des Umrichterwerks 13.

Am Eingang des Verfahrens 40 liegt ein Spannungssollwert u_{1B}* an, bei dem es sich um den im Zusammenhang mit der Figur 1 erwähnten und von der dortigen Empfangs- und Auswerteeinrichtung 32 erzeugten Spannungssollwert u* handelt.

Weiterhin sind dem Verfahren 40 eingangsseitig eine Spannung u_{1B} und ein Strom i_{1B} zugeführt, die von dem jeweiligen Umrichterwerk 13 mit Hilfe der im Zusammenhang mit der Figur 1 erwähnten Sensoren 29 gemessen werden. Insoweit handelt es sich bei der Spannung u_{1B} um eine der beiden im Zusammenhang mit der Figur 1 erläuterten, am Ausgang der Transformatoren 23 vorhandenen Spannungen u_{w1}, u_{w2} und bei dem Strom i_{1B} handelt es sich um den zugehörigen abgegebenen Strom.

Das Verfahren 40 weist zwei Umschalter 42 auf, die sich in der in der Figur 2 dargestellten Position befinden, sofern die im Zusammenhang mit der Figur 1 erläuterte Übertragung der Spannungen uᵥ₁, uᵥ₂ an die in der Figur 1 gezeigte Empfangs- und Auswerteeinrichtung 32 korrekt erfolgt. Dieser funktionstüchtige Fall wird nachfolgend erläutert.

Das Verfahren 40 weist einen Spannungsregler 44 auf, dem der Spannungssollwert u_{1B}* zugeführt ist. Weiterhin weist das Verfahren 40 eine Umrechnung 46 auf, die die auf der Primärseite des zugehörigen Transformators 23 gemessene Spannung u_{1B} analysiert und in deren Frequenz f_{B}, deren Phase ϕ_{u1B} und deren Grundschwingungsamplitude u_{1B(a)} zerlegt. Die Frequenz f_{B}, die Phase ϕ_{u1B} und die Grundschwingungsamplitude u_{1B(a)} sind dem Spannungsregler 44 zugeführt.

In Abhängigkeit von dem Spannungssollwert u_{1B}* und zumindest einem der aus der gemessenen Spannung u_{1B} ermittelten Werte f_{B}, ϕ_{u1B}, u_{1B(a)} erzeugt der Spannungsregler 44 einen Wirkleistungssollwert P^{*}_{B} und einen Blindleistungssollwert Q^{*}_{B}, die über die Umschalter 42 an einen Wirkleistungsregler 48 und einen Blindleistungsregler 49 weitergegeben werden.

Das Verfahren 40 weist eine Leistungsberechnung 51 auf, die in Abhängigkeit von der Phase ϕ_{u1B} und der Grundschwingungsamplitude u_{1B(a)} sowie in Abhängigkeit von dem gemessenen Strom i_{1B} einen Wirkleistungsistwert P_{B} und einen Blindleistungsistwert Q_{B} erzeugt. Der Wirkleistungsistwert P_{B} ist dem Wirkleistungsregler 48 und der Blindleistungsistwert Q_{B} ist dem Blindleistungsregler 49 zugeführt.

Ausgangsseitig erzeugt der Wirkleistungsregler 48 eine Phasendifferenz Δϕ* und der Blindleistungsregler 49 eine Spannungsdifferenz Δu*_{1B}. Die Phasendifferenz Δϕ* wird additiv mit der Phase ϕ_{u1B} und die Spannungsdifferenz Δu*_{1B} wird additiv mit der Grundschwingungsamplitude u_{1B(a)} verknüpft. Die Additionen ergeben eine Phase ϕ_{u2B} und eine Grundschwingungsamplitude u_{2B(a)}, die sich auf die Sekundärseite des zugehörigen Transformators 23 beziehen. Die Phase ϕ_{u2B} wird einer cos-Umrechnung 53 unterzogen und der sich ergebende Wert wird mit der Grundschwingungsamplitude u_{2B(a)} multiplikativ verknüpft. Die Multiplikation ergibt eine Sollspannung u*_{2B}, die das Ausgangssignal des Verfahrens 40 darstellt, und die am Ausgang des zugehörigen Umrichters 26 vorhanden ist.

Die vorstehend erläuterte Vorgehensweise erfordert das Vorhandensein des Spannungssollwerts u_{1B}* (Figur 2) bzw. u* (Figur 1). Ist dieser Spannungssollwert u_{1B}* bzw. u* beispielsweise aufgrund einer gestörten Übertragung der Spannungen uᵥ₁, uᵥ₂ nicht vorhanden, so werden die Umschalter 42 in die in der Figur 2 nicht dargestellte Position geschaltet. Die vorstehend erläuterte Vorgehensweise wird damit nicht mehr ausgeführt. Stattdessen wird in diesem funktionsuntüchtigen Fall wie folgt vorgegangen.

Das Verfahren 40 weist einen Netzregler 55 auf, dem eine oder mehrere der von der Umrechnung 46 zur Verfügung gestellten Frequenz f_{B}, Phase ϕ_{u1B} und/oder Grundschwingungsamplitude u_{1B(a)} zugeführt sind. Weiterhin können dem Netzregler 55 gegebenenfalls der von der Leistungsberechnung 51 zur Verfügung gestellte Wirkleistungsistwert P_{B} und/oder Blindleistungsistwert Q_{B} zugeführt sein.

In Abhängigkeit von einer oder mehreren dieser Eingangsgrößen ermittelt der Netzregler 55 einen Wirkleistungswert und einen Blindleistungswert, die einer Leistungsbegrenzung 57 zugeführt sind. Von dieser Leistungsbegrenzung 57 werden der Wirkleistungswert und der Blindleistungswert in Abhängigkeit von vorgegebenen minimalen und maximalen Werten begrenzt. Insbesondere wird der Wirkleistungswert auf einen vorgegebenen Wirkleistungsmaximalwert Pₘₐₓ und/oder einen vorgegebenen Wirkleistungsminimalwert Pₘᵢₙ begrenzt und/oder es wird der Wirkleistungswert auf eine vorgegebene maximale Arbeit Wₘₐₓ in einem bestimmten Zeitintervall begrenzt. Auch der Blindleistungswert wird auf eine entsprechende oder ähnliche Weise begrenzt. Die sich ergebenden begrenzten Werte stellen den über die Umschalter 42 weitergegebenen Wirkleistungssollwert P*_{B} und Blindleistungssollwert Q*_{B} dar.

Es wird darauf hingewiesen, dass die Leistungsbegrenzung 57 gegebenenfalls auch entfallen kann. In diesem Fall stellen der von dem Netzregler 55 erzeugte Wirkleistungswert und Blindleistungswert unmittelbar den über die Umschalter 42 weitergegebenen Wirkleistungssollwert P*_{B} und Blindleistungssollwert Q*_{B} dar.

Weiterhin wird darauf hingewiesen, dass der Spannungsregler 44 gegebenenfalls auch entfallen kann. In diesem Fall sind auch die Umschalter 42 nicht mehr erforderlich. Statt dessen ist dann das gesamte Verfahren 40 auf dem Netzregler 55 aufgebaut, der - gegebenenfalls mit Hilfe der Leistungsbegrenzung 57 - den Wirkleistungssollwert P*_{B} und Blindleistungssollwert Q*_{B} erzeugt.

Eine erste Ausführungsform des Netzreglers 55 ist in der Figur 3a gezeigt.

Dort weist der Netzregler 55 einen U(a)-Regler 61 und einen cos(ϕ)-Regler 62 auf. Dem U(a)-Regler 61 sind eine Soll-Grundschwingungsamplitude u*_{1B(a)} und die Grundschwingungsamplitude u_{1B(a)} zugeführt. Die Soll-Grundschwingungsamplitude u*_{1B(a)} wird geschätzt und dem Netzregler 55 vorgegeben. Bei der Soll-Grundschwingungsamplitude u*_{1B(a)} handelt es sich um diejenige Spannungsamplitude, die auf den Sammelschienen 211, 212 der beiden Unterwerke 11, 12 vorhanden ist. Insbesondere kann diese Spannungsamplitude mit Hilfe eines mittelnden und gegebenenfalls gewichtenden Verfahrens berechnet werden. Die Grundschwingungsamplitude u_{1B(a)} wird von der Umrechnung 46 aus der gemessenen Spannung u_{1B} erzeugt.

Aus diesen Eingangswerten erzeugt der U(a)-Regler 61 einen Scheinleistungssollwert S*_{B}, der dem cos(ϕ)-Regler 62 zugeführt ist. Weiterhin ist dem cos(ϕ)-Regler 62 ein Soll-Leistungsfaktor cosϕ* zugeführt. Bei dem Soll-Leistungsfaktor cosϕ* handelt es sich um einen geschätzten mittleren Leistungsfaktor, der die durch den Bahnbetrieb entstehenden Lasten repräsentiert.

Aus diesen Eingangswerten erzeugt der cos(ϕ)-Regler 62 die über die Umschalter 42 weitergegebenen Wirkleistungssollwert P*_{B} und Blindleistungssollwert Q*B.

Wie erläutert, können die Soll-Grundschwingungsamplitude u*_{1B(a)} und der Soll-Leistungsfaktor cosϕ* geschätzt werden. Dies kann beispielsweise vor der Inbetriebnahme des Netzreglers 55 erfolgen.

Alternativ oder ergänzend ist es möglich, dass die Soll-Grundschwingungsamplitude u*_{1B(a)} und der Soll-Leistungsfaktor cosϕ* im ungestörten, also funktionstüchtigen Betrieb der Übertragung der Spannungen uᵥ₁, uᵥ₂ der Figur 1 in vorgegebenen Zeitabständen ermittelt und gespeichert werden. Diese gespeicherten Werte der Soll-Grundschwingungsamplitude u*_{1B(a)} und des Soll-Leistungsfaktors cosϕ* können dann bei gestörter Übertragung der Spannungen uᵥ₁, uᵥ₂ der Figur 1 verwendet werden.

Eine zweite Ausführungsform des Netzreglers 55 ist in der Figur 3b gezeigt. Die Figur 3b baut dabei auf der Figur 3a auf und stellt eine Erweiterung des Reglers 55 der Figur 3a dar. Insoweit wird auf die Beschreibung der Figur 3a Bezug genommen.

Der Netzregler 55 der Figur 3b weist eine Lastermittlung 64 auf, der die Grundschwingungsamplitude u_{1B(a)} und der Wirkleistungsistwert P_{B} sowie der Blindleistungsistwert Q_{B} zugeführt sind. Die Grundschwingungsamplitude u_{1B(a)} wird dabei von der Umrechnung 46 und der Wirkleistungsistwert P_{B} sowie der Blindleistungsistwert Q_{B} von der Leistungsberechnung 51 erzeugt.

Weiterhin sind der Lastermittlung 64 über einen Eingang 65 eine oder mehrere Größen zugeführt, die die Wirk- und Blindleistung der benachbarten Unterwerke 11, 12 repräsentieren. Wahlweise können auch die Scheinleistung und der Leistungsfaktor zugeführt werden. Diese Leistungsgrößen können in vorgegebenen Zeitabständen über vorhandene Leittechniken an den Netzregler 55 übermittelt werden. Die Leistungsgrößen werden also nicht über den Sender 31 und die Empfangs- und Auswerteeinrichtung 32 der Figur 1 übertragen, sondern unabhängig davon. Die Übermittlung der Leistungsgrößen kann dabei in größeren Zeitabständen erfolgen, beispielsweise im Abstand von etwa 5 Minuten bis etwa 15 Minuten.

Aus diesen Leistungsgrößen kann die Lastermittlung 64 beispielsweise eine mittlere Spannungsamplitude der benachbarten Unterwerke 11, 12 und/oder einen mittleren Leistungsfaktor derselben ermitteln. Bei dieser Berechnung können der Wirkleistungsistwert P_{B} und/oder der Blindleistungsistwert Q_{B} und/oder die Grundschwingungsamplitude u_{1B(a)} berücksichtigt werden.

In Abhängigkeit von diesen Eingangsgrößen erzeugt die Lastermittlung 64 eine Ersatz-Soll-Grundschwingungsamplitude Eu*_{1B(a)} und einen Ersatz-Soll-Leistungsfaktor Ecosϕ*, die anstelle der Soll-Grundschwingungsamplitude u*_{1B(a)} und des Soll-Leistungsfaktors cosϕ* an den U(a)-Regler 61 und den cos(ϕ)-Regler 62 weitergegeben werden.

Entsprechend den Erläuterungen der Figur 3a erzeugen der U(a)-Regler 61 und der cos(ϕ)-Regler 62 der Figur 3b aus der Ersatz-Soll-Grundschwingungsamplitude Eu*_{1B(a)} und dem Ersatz-Soll-Leistungsfaktor Ecos_{ϕ}* sowie aus der von der Umrechnung 46 gelieferten Grundschwingungsamplitude u_{1B(a)} den über die Umschalter 42 weitergegebenen Wirkleistungssollwert P*_{B} und Blindleistungssollwert Q*_{B}.

## Patentansprüche

1. Verfahren (40) zum Betreiben eines Umrichterwerks (13) eines elektrischen Bahn-Netzes (10) mittels eines Netzreglers (55), wobei das elektrische Bahn-Netz (10) Fahrleitungen (34) und Unterwerke (11, 12) mit gemeinsamen Sammelschienen (211, 212) aufweist, wobei das Umrichterwerk (13) benachbart zu den Unterwerken (11, 12) angeordnet ist und einen Umrichter (26) und eine weitere gemeinsame Sammelschiene (28) aufweist, wobei der Umrichter (26) geeignet ist, die Spannung auf der Sammelschiene (28) des Umrichterwerks (13) so einzustellen, dass sie im Wesentlichen die gleiche Amplitude, Frequenz und Phasenlage wie auf den gemeinsamen Sammelschienen (211, 212) der Unterwerke (11, 12) hat, **dadurch gekennzeichnet, dass** aufgrund einer gestörten Übertragung der Spannungen (uᵥ₁, uᵥ₂) von den Unterwerken (11, 12):
aus einer Spannung (u_{1B}), welche an einem Ausgang eines mit dem Umrichter (26) gekoppelten Transformator (23) gemessen wird, deren Grundschwingungsamplitude (u_{1B(a)}) ermittelt wird,
dass eine Soll-Grundschwingungsamplitude (u*_{1B(a)}) und ein Soll-Leistungsfaktor (cosϕ*) vorgegeben werden, wobei die Soll-Grundschwingungsamplitude (u*_{1B(a)}) und der Soll-Leistungsfaktor (cosϕ*) geschätzt werden, beispielsweise vor Inbetriebnahme des Netzreglers (55), und/oder die Soll-Grundschwingungsamplitude (u*_{1B(a)}) und der Soll-Leistungsfaktor (cosϕ*) während funktionstüchtigem Betrieb der Übertragung der Spannungen (uᵥ₁, uᵥ₂) der Unterwerke (11, 12) in vorgegebenen Zeitabständen ermittelt und gespeichert werden,
dass aus der Grundschwingungsamplitude (U_{1B(a)}) und der Soll-Grundschwingungsamplitude (U*_{1B(a)}) ein Scheinleistungssollwert (S*_{B}) ermittelt wird,
dass aus der Scheinleistungssollwert (S*_{B}) und dem Soll-Leistungfaktor (cosϕ*) ein Wirkleistungssollwert (P*_{B}) und ein Blindleistungssollwert (Q*_{B}) ermittelt werden, und
dass aus dem Wirkleistungssollwert (P*_{B}) und dem Blindleistungssollwert (Q*_{B}) eine Sollspannung bestimmt wird, um eine Ausgangsspannung des Umrichters (13) einzustellen, um die Übertragungsverluste über die Fahrleitungen zu minimieren.

2. Verfahren (40) nach Anspruch 1, wobei es sich bei der Soll-Grundschwingungsamplitude (u*_{1B(a)}) im wesentlichen um diejenige Spannungsamplitude handelt, die in den beiden Unterwerken (11, 12) vorhanden ist, und die gegebenenfalls zusätzlich gemittelt und/oder gewichtet wird.

3. Verfahren (40) nach einem der Ansprüche 1 oder 2, wobei es sich bei dem Soll-Leistungsfaktor (cosϕ*) um einen mittleren Leistungsfaktor handelt, der die durch den Bahnbetrieb entstehenden Lasten repräsentiert.

4. Verfahren (40) nach einem der Ansprüche 1 bis 3, wobei die Soll-Grundschwingungsamplitude (u*_{1B(a)}) und der Soll-Leistungsfaktor (cosϕ*) vor der Inbetriebnahme des Verfahrens (40) vorgegeben, insbesondere geschätzt werden.

5. Verfahren (40) nach einem der Ansprüche 1 bis 4, wobei die Soll-Grundschwingungsamplitude (u*_{1B(a)}) und der Soll-Leistungsfaktor (cosϕ*) im Betrieb des Verfahrens (40) korrigiert bzw. adaptiert werden.

6. Verfahren (40) nach Anspruch 5, wobei in einem ungestörten Betrieb in vorgegebenen Zeitabständen die Soll-Grundschwingungsamplitude (u*_{1B(a)}) und der Soll-Leistungsfaktor (cosϕ*) ermittelt und gespeichert werden, und wobei diese gespeicherten Werte in einem gestörten Betrieb zur Vorgabe der Soll-Grundschwingungsamplitude (u*_{1B(a)}) und des Soll-Leistungsfaktor (cosϕ*) herangezogen werden.

7. Verfahren (40) nach einem der Ansprüche 1 bis 6, wobei eine Ersatz-Soll-Grundschwingungsamplitude (Eu*_{1B(a)}) und ein Ersatz-Soll-Leistungsfaktor (Ecosϕ*) ermittelt werden, die anstelle der Soll-Grundschwingungsamplitude (u*_{1B(a)}) und des Soll-Leistungsfaktors (cosϕ*) verwendet werden.

8. Verfahren (40) nach Anspruch 7, wobei aus der gemessenen Spannung (u_{1B}) deren Phase (ϕ_{u1B}) ermittelt wird, wobei ein Wirkleistungsistwert (P_{B}) und ein Blindleistungsistwert (Q_{B}) ermittelt werden, und wobei die Ersatz-Soll-Grundschwingungsamplitude (Eu*_{1B(a)}) und der Ersatz-Soll-Leistungsfaktor (Ecosϕ*) aus diesen Grössen ermittelt werden.

9. Verfahren (40) nach Anspruch 8, wobei der Wirkleistungsistwert (P_{B}) und der Blindleistungsistwert (Q_{B}) aus der Grundschwingungsamplitude (u_{1B(a)}), der Phase (ϕ_{u1B}) und einem gemessenen Strom (i_{1B}), gemessen am Ausgang des Transformator (23), ermittelt werden.

10. Vorrichtung zur Durchführung des Verfahrens nach einem der vorstehenden Ansprüche, wobei ein Netzregler (55) vorhanden ist, dem die Soll-Grundschwingungsamplitude (u*_{1B(a)}), der Soll-Leistungsfaktor (cosϕ*) und die Grundschwingungsamplitude (u_{1B(a)}) zugeführt sind, und der den Wirkleistungssollwert (P^{*}_{B}) und den Blindleistungssollwert (Q^{*}_{B}) erzeugt.

11. Vorrichtung nach Anspruch 10, wobei eine Lastermittlung (64) vorhanden ist, der eine Grundschwingungsamplitude (u_{1B(a)}), ein Wirkleistungsistwert (P_{B}) und ein Blindleistungsistwert (Q_{B}) zugeführt sind, und die eine Ersatz-Soll-Grundschwingungsamplitude (Eu*_{1B(a)}) und einen Ersatz-Soll-Leistungsfaktor (Ecosϕ*) anstelle der Soll-Grundschwingungsamplitude (u*_{1B(a)}) und des Soll-Leistungsfaktors (cosϕ*) erzeugt.

12. Vorrichtung nach Anspruch 11, wobei der Lastermittlung (64) Leistungsdaten der benachbarten Unterwerke (11, 12) zugeführt sind, insbesondere eine oder mehrere Grössen, die die Wirk- und/oder Blindleistung und/oder die Scheinleistung und/oder den Leistungsfaktor der benachbarten Unterwerke (11, 12) repräsentieren.

## Claims

1. Method (40) for operating a converter station (13) of an electrical rail network (10) by means of a network regulator (55), wherein the electrical rail work (10) comprises overhead contact lines (34) and substations (11, 12) with common bus bars (211, 212), wherein the converter station (13) is arranged adjacent to the substations (11, 12) and comprises a converter (26) and a further common bus bar (28), wherein the converter (26) is able to set the voltage at the bus bar (28) of the converter station (13) such that it substantially has the same amplitude, frequency and phase position as on the common bus bars (211, 212) of the substation (11, 12), **characterised in that** because of a disrupted transmission of the voltages (uᵥ₁, uᵥ₂) from the substations (11, 12):
- from a voltage (u_{1B}) measured at an output of a transformer (23) coupled to the converter (26), its base oscillation amplitude (u_{1B(a)}) is determined,
- a nominal base oscillation amplitude (u*_{1B(a)}) and a nominal power factor (cosϕ*) are predefined, wherein the nominal base oscillation amplitude (u*_{1B(a)}) and the nominal power factor (cosϕ*) are estimated, for example before the network regulator (55) is brought into use, and/or the nominal base oscillation amplitude (u*_{1B(a)}) and the nominal power factor (cosϕ*) are determined and stored at predefined time intervals during functional operation of the transmission of the voltages (uᵥ₁, uᵥ₂) from the substations (11, 12),
- from the base oscillation amplitude (U_{1B(a)}) and the nominal base oscillation amplitude (u*_{1B(a)}), an apparent power nominal value (S*_{B}) is determined,
- from the apparent power nominal value (S*_{B}) and the nominal power factor (cosϕ*), an active power nominal value (P*_{B}) and a reactive power nominal value (Q*_{B}) are determined, and
- from the active power nominal value (P*_{B}) and the reactive power nominal value (Q*_{B}), a nominal voltage is determined in order to set an output voltage of the converter (13) so as to minimise the transmission losses over the overhead contact lines.

2. Method (40) according to claim 1, wherein the nominal base oscillation amplitude (u*_{1B(a)}) is substantially the voltage amplitude which is present in the two substations (11, 12) and which is in some cases additionally averaged and/or weighted.

3. Method (40) according to claim 1 or 2, wherein the nominal power factor (cosϕ*) is a mean power factor which represents the loads occurring in railway operation.

4. Method (40) according to any of claims 1 to 3, wherein the nominal base oscillation amplitude (U*_{1B(a)}) and the nominal power factor (cosϕ*) are predefined, in particular estimated, before the method (40) is brought into use.

5. Method (40) according to any of claims 1 to 4, wherein the nominal base oscillation amplitude (U*_{1B(a)}) and the nominal power factor (cosϕ*) are corrected or adapted during operation of the method (40).

6. Method (40) according to claim 5, wherein the nominal base oscillation amplitude (U*_{1B(a)}) and the nominal power factor (cosϕ*) are determined and stored at predefined time intervals in undisrupted operation, and wherein these stored values are used to predefine the nominal base oscillation amplitude (U*_{1B(a)}) and the nominal power factor (cosϕ*) in disrupted operation.

7. Method (40) according to any of claims 1 to 6, wherein a substitute nominal base oscillation amplitude (Eu*_{1B(a)}) and a substitute nominal power factor (Ecosϕ*) are determined which are used instead of the nominal base oscillation amplitude (U*_{1B(a)}) and the nominal power factor (cosϕ*).

8. Method (40) according to claim 7, wherein from the measured voltage its phase (ϕ_{u1B}) is determined, wherein an active power actual value (P_{B}) and a reactive power actual value (Q_{B}) are determined, and wherein the substitute nominal base oscillation amplitude (Eu*_{1B(a)}) and the substitute nominal power factor (Ecosϕ*) are determined from these values.

9. Method (40) according to claim 8, wherein the active power actual value (P_{B}) and the reactive power actual value (Q_{B}) are determined from the base oscillation amplitude (U_{1B(a)}), the phase (ϕ_{u1B}) and a measured current (i_{1B}) measured at the output from the transformer (23).

10. Device for performing the method according to any of the preceding claims, wherein a network regulator (55) is present, to which the nominal base oscillation amplitude (U*_{1B(a)}), the nominal power factor (cosϕ*) and the base oscillation amplitude (U_{1B(a)}) are supplied, and which produces the active power nominal value (P^{*}_{B}) and the reactive power nominal value (Q*_{B}).

11. Device according to claim 10, wherein a load determination device (64) is present, to which a base oscillation amplitude (U_{1B(a)}), an active power actual value (P_{B}) and a reactive power actual value (Q_{B}) are supplied, and which produces a substitute nominal base oscillation amplitude (Eu*_{1B(a)}) and a substitute nominal power factor (Ecosϕ*) instead of the nominal base oscillation amplitude (U*_{1B(a)}) and the nominal power factor (cosϕ*).

12. Device according to claim 11, wherein the load determination device (64) receives power data from adjacent substations (11, 12), in particular one or more values which represent the active and/or reactive power and/or the apparent power and/or the power factor of the adjacent substations (11, 12).

## Revendications

1. Procédé (40) destiné à faire fonctionner une station de convertisseur (13) d'un réseau ferroviaire électrique (10) à l'aide d'un régulateur de réseau (55), selon lequel le réseau ferroviaire électrique (10) présente des caténaires (34) et des sous-stations (11, 12) comportant des barres omnibus (211, 212) communes, selon lequel la station de convertisseur (13) est disposée dans le voisinage des sous-stations (11, 12) et présente un convertisseur (26) et une barre omnibus (28) commune supplémentaire, le convertisseur (26) étant adapté pour régler la tension sur la barre omnibus (28) de la station de convertisseur (13) de manière telle qu'elle présente sensiblement la même amplitude, la même fréquence et la même position de phase que sur les barres omnibus (211, 212) communes de la sous-station (11, 12), **caractérisé en ce que**, en raison d'une transmission perturbée des tensions (uᵥ₁, uᵥ₂) à partir des sous-stations (11, 12), on détermine,
à partir d'une tension (u_{u1B}) qui est mesurée à une sortie d'un transformateur (23) couplé au convertisseur (26), l'amplitude fondamentale (u_{1B(a)}) de celle-ci,
**en ce que** l'on prédétermine une amplitude fondamentale de consigne (u*_{1B(a)}) et un facteur de puissance de consigne (cosϕ*), sachant que l'amplitude fondamentale de consigne (u*_{1B(a)}) et le facteur de puissance de consigne (cosϕ*) sont estimés, par exemple avant la mise en service du régulateur de réseau (55), et/ou l'amplitude fondamentale de consigne (u*_{1B(a)}) et le facteur de puissance de consigne (cosϕ*) sont déterminés à des intervalles de temps prédéfinis, pendant le fonctionnement en bon état de marche de la transmission des tensions (uᵥ₁, uᵥ₂) des sous-stations (11, 12), et sont enregistrés,
**en ce que** l'on détermine une valeur de consigne de puissance apparente (S*_{B}) à partir de l'amplitude fondamentale (U_{1B(a)}) et de l'amplitude fondamentale de consigne (U*_{1B(a)}),
**en ce que** l'on détermine une valeur de consigne de puissance effective (P*_{B}) et une valeur de consigne de puissance réactive (Q*_{B}) à partir de la valeur de consigne de puissance apparente (S*_{B}) et du facteur de puissance de consigne (cosϕ*), et
**en ce que** l'on détermine une tension de consigne à partir de la valeur de consigne de puissance effective (P*_{B}) et de la valeur de consigne de puissance réactive (Q*_{B}), afin de régler une tension de sortie du convertisseur (13), pour réduire à un minimum les pertes de transmission via les caténaires.

2. Procédé (40) selon la revendication 1, selon lequel l'amplitude fondamentale de consigne (u*_{1B(a)}) est sensiblement l'amplitude de tension qui est présente dans les deux sous-stations (11, 12) et pour laquelle on établit le cas échéant en plus une moyenne et/ou une pondération.

3. Procédé (40) selon l'une des revendications 1 ou 2, selon lequel le facteur de puissance de consigne (cosϕ*) est un facteur de puissance moyen qui représente les charges produites par le trafic ferroviaire.

4. Procédé (40) selon l'une des revendications 1 à 3, selon lequel l'amplitude fondamentale de consigne (u*_{1B(a)}) et le facteur de puissance de consigne (cosϕ*) sont prédéterminés et sont notamment estimés, avant la mise en oeuvre du procédé (40).

5. Procédé (40) selon l'une des revendications 1 à 4, selon lequel l'amplitude fondamentale de consigne (u*_{1B(a)}) et le facteur de puissance de consigne (cosϕ*) sont corrigés ou adaptés lors du fonctionnement du procédé (40).

6. Procédé (40) selon la revendication 5, selon lequel, au cours d'un fonctionnement sans perturbations, l'amplitude fondamentale de consigne (u*_{1B(a)}) et le facteur de puissance de consigne (cosϕ*) sont déterminés et enregistrés à des intervalles de temps prédéfinis, et selon lequel, pendant un fonctionnement perturbé, ces valeurs enregistrées sont utilisées pour prédéfinir l'amplitude fondamentale de consigne (u*_{1B(a)}) et le facteur de puissance de consigne (cosϕ*).

7. Procédé (40) selon l'une des revendications 1 à 6, selon lequel on détermine une amplitude fondamentale de consigne équivalente (Eu*_{1B(a)}) et un facteur de puissance de consigne équivalent (Ecosϕ*), qui sont utilisés à la place de l'amplitude fondamentale de consigne (u*_{1B(a)}) et du facteur de puissance de consigne (cosϕ*).

8. Procédé (40) selon la revendication 7, selon lequel on détermine, à partir de la tension mesurée la phase (ϕ_{u1B}) de celle-ci, et on détermine une valeur réelle de puissance effective (P_{B}) et une valeur réelle de puissance réactive (Q_{B}), et on détermine l'amplitude fondamentale de consigne équivalente (Eu*_{1B(a)}) et le facteur de puissance de consigne équivalent (Ecosϕ*) à partir de ces grandeurs.

9. Procédé (40) selon la revendication 8, selon lequel la valeur réelle de puissance effective (P_{B}) et la valeur réelle de puissance réactive (Q_{B}) sont déterminées à partir de l'amplitude fondamentale (u_{1B(a)}), de la phase (ϕ_{u1B}) et d'un courant mesuré (i_{1B}), mesurés à la sortie du transformateur (23).

10. Dispositif destiné à la mise en oeuvre du procédé selon l'une des revendications précédentes, dans lequel il est prévu un régulateur de réseau (55) auquel sont transmis l'amplitude fondamentale de consigne (u*_{1B(a)}), le facteur de puissance de consigne (cosϕ*) et l'amplitude fondamentale (u_{1B(a)}), et qui génère la valeur de consigne de puissance effective (P*_{B}) et la valeur de consigne de puissance réactive (Q*_{B}).

11. Dispositif selon la revendication 10, dans lequel il est prévu une détermination de la charge (64) à laquelle sont transmis une amplitude fondamentale (u_{1B(a)}), une valeur réelle de puissance effective (P_{B}) et une valeur réelle de puissance réactive (Q_{B}), et qui génère une amplitude fondamentale de consigne équivalente (Eu*_{1B(a)}) et un facteur de puissance de consigne équivalent (Ecosϕ*) à la place de l'amplitude fondamentale de consigne (u*_{1B(a)}) et du facteur de puissance de consigne (cosϕ*).

12. Dispositif selon la revendication 11, dans lequel on transmet à la détermination de la charge (64), des données de puissance des sous-stations (11, 12) voisines, en particulier une ou plusieurs grandeurs qui représentent la puissance effective et/ou réactive et/ou la puissance apparente et/ou le facteur de puissance des sous-stations (11, 12) voisines.
